# EUROPEAN PATENT SPECIFICATION

(11) **EP 3 875 764 B1**
(45) Date of publication and mention of the grant of the patent: **29.04.2026**
(21) Application number: 21159895.8
(22) Date of filing: 01.03.2021
(51) Int. Cl.: F04C 25/02

(54) **VACUUM PUMP, PARTICULARLY FOR APPARATUSES FOR FOOD PRESERVATION**
VAKUUMPUMPE, INSBESONDERE FÜR GERÄTE ZUR LEBENSMITTELERHALTUNG
POMPE À VIDE, EN PARTICULIER POUR LES APPAREILS DE CONSERVATION DES ALIMENTS

(30) Priority: 04.03.2020 IT 202000004513
(43) Date of publication of application: 08.09.2021
(73) Proprietor: Salvaro, Marziano, 37024 Negrar (Prov. of Verona) (IT)
(72) Inventor: Salvaro, Marziano, 37024 Negrar (Prov. of Verona) (IT)
(74) Representative: Modiano, Micaela Nadia

(56) References cited:
- WO-A1-2019/166882
- FR-A1- 3 067 069
- US-A- 5 110 264
- US-A1- 2004 090 197
- US-A1- 2004 265 135
- US-A1- 2005 260 082
- US-A1- 2010 315 034
- US-B2- 8 303 269

## Description

The present invention relates to a vacuum pump, particularly for apparatuses for food preservation. More specifically, the invention relates to a vacuum pump, particularly for apparatuses for the preservation of food both cooked and raw.

US5110264A discloses a vacuum pump according to the preamble of claim 1.

US2005/260082 and FR3067069 describe known vacuum pumps

As is known, apparatuses for professional and domestic use, which generate a level of vacuum internally in order to improve the preservation of cooked and raw foods, are characterized by a vacuum generation system which is commonly constituted by a container, which becomes hermetically sealed, a channel system designed for the circulation of air, a vacuum pump, an alternating current asynchronous electric motor and, finally, a sealing system.

The operation of the system is ensured by numerous solenoid valves, and by sensors and actuators controlled by firmware that resides in an electronic power board which is generally connected also to an electronic user interface board which is provided with a display.

Usually, foods that are to be subjected to the vacuum process are placed inside sealable plastic containers.

The foods can be introduced both hot and cold into the apparatus for vacuum preservation. The vacuum process inevitably extracts a small amount of water from the foods along with biochemical liquids which, in the form of vapor, transport particles of biological material of various composition. The amount of liquid extracted and of biological material transported is proportional to the temperature of the food, to the surface humidity of the food and to the diffusivity characteristic of the moist part of the food.

The vacuum generation process is very rapid and, in the short length of time for which the pump is connected to the container, it sucks out, together with the air, vapor which entrains particles of biological material along with it.

The inevitable effect of transfer is that water, biochemical liquids and biological material even in the form of dry particulate, accumulate inside the pump. The mixture aggregates without mixing completely with the lubrication and cooling oil of the pump itself, by virtue of additives added to the oil.

The presence of water and of biological substances with different heat exchange capacities alters the characteristics of the oil, and furthermore generates oxidized components, to the point where the physical characteristics of the oil deteriorate significantly, in particular its viscosity, dielectric capacity and thermal conductivity.

The presence of water and of biochemical liquid that have a boiling point different from that of oil alters the heat transfer coefficient of the oil with tangible effects on the lifetime and on the seal of the vacuum pump.

The aim of the present invention is to provide a vacuum pump, particularly for apparatuses for food preservation, that makes it possible to optimize, within a defined torque range, any breakaway torque demand, during operation, and cutoff torque demand.

Within this aim, an object of the present invention is to provide a vacuum pump, particularly for apparatuses for food preservation, that makes it possible to evaluate the variation of the viscosity of the lubricant oil during operation.

Another object of the present invention is to provide a vacuum pump, particularly for apparatuses for food preservation, that makes it possible to create customized cycles that are slow, fast, mixed, adaptable, and related combinations thereof.

Another object of the present invention is to provide a vacuum pump, particularly for apparatuses for food preservation, that makes it possible to run a malfunction diagnostic procedure in the absence of sensors.

Another object of the present invention is to provide a vacuum pump, particularly for apparatuses for food preservation, that is highly reliable, has a reduced bulk with respect to conventional pumps, is easily and practically implemented, and has a low cost.

This aim and these and other objects which will become better apparent hereinafter are achieved by a vacuum pump

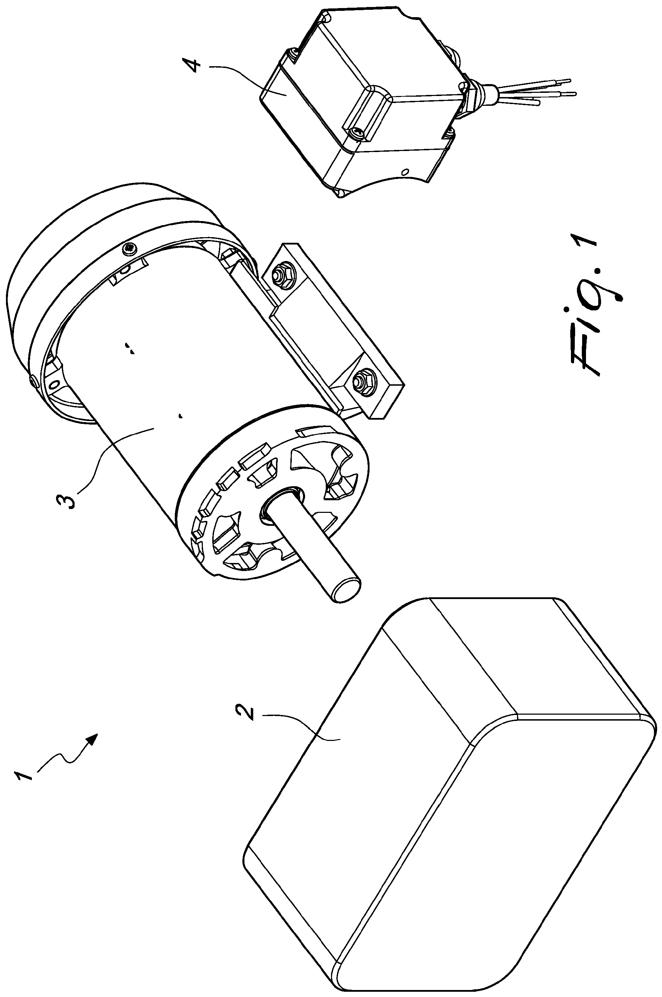

Further characteristics and advantages of the invention will become better apparent from the detailed description of a preferred, but not exclusive, embodiment of the pump according to the invention, illustrated by way of non-limiting example in the accompanying drawings, wherein the single figure is an exploded perspective view of the pump according to the present invention.

With reference to the figure, the pump according to the present invention, generally designated by the reference numeral 1, comprises a pump body 2, a permanent-magnet motor with variable rotation rate 3 which is adapted to control the pump body 2, and an electronic power and control board 4 which is designed to control the permanent-magnet motor with variable rotation rate 3.

Conveniently, the electronic board 4 is capable of controlling the torque exerted by the motor by deriving from such information an evaluation of the variation of the viscosity of the oil of the pump, as a function of the variation of the resistive torque.

A change in power absorbed by the motor is read by the electronic board 4 as a change in the current generated by the change in the magnetic field, and is therefore easily measurable even for small changes, without the presence of any dedicated sensor.

It has been found that under operating conditions the vacuum pump with permanent-magnet motor with variable rotation rate absorbs approximately 36% less than an identical pump with a conventional asynchronous motor.

Even at breakaway, the pump with permanent-magnet motor with variable rotation rate absorbs approximately 30% less power.

Furthermore, the starting of the pump can be controlled with a ramping-up of current or with a change in rotation frequency which, for the same torque required, optimizes the power yielded.

In general, the torque of the pump, by virtue of the presence of the permanent-magnet motor with variable rotation rate, can be optimized for all the load conditions of the pump, thus optimizing the overall operation thereof.

The presence of a permanent-magnet motor with variable rotation rate with a corresponding power and control board 4 makes it possible, via control algorithms, to control functions that are usually entrusted to the presence of sensors.

Furthermore, it is possible to obtain a reduction in size of a single vacuum pump, electric motor and electronic board compared to a vacuum pump fitted with a conventional asynchronous motor.

In general, the power and control board is configured to define start-stop profiles with ramping-up or ramping-down for the permanent-magnet motor with variable rotation rate.

In practice it has been found that the pump according to the invention fully achieves the set aim and objects, in that it makes it possible to have an optimized operation by virtue of the presence of a permanent-magnet motor with variable rotation rate with an electronic power and control board.

The pump thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vacuum pump (1), particularly for apparatuses for food preservation, which comprises a pump body (2), further comprising a permanent-magnet motor with variable rotation rate (3) which is adapted to control said pump, and an electronic power and control board (4) configured to control said permanent-magnet motor with variable rotation rate (3) **characterized in that** said electronic power and control board (4) is configured to use the variation of the viscosity of the lubricant oil of the pump as a function of the variation of the resistive torque.

2. The pump according to claim 1, **characterized in that** said electronic power and control board (4) is configured to read the variation in power absorbed by said permanent-magnet motor with variable rotation rate (3) as a variation of the current generated by the variation of the magnetic field of said permanent-magnet motor.

3. The pump according to one or more of the preceding claims, **characterized in that** said electronic power and control board (4) is configured to optimize the torque demand of said permanent-magnet motor with variable rotation rate (3).

4. The pump according to one or more of the preceding claims, **characterized in that** said electronic power and control board (4) is configured to define start-stop profiles with ramping-up or ramping-down for said permanent-magnet motor with variable rotation rate (3).

5. An apparatus for food preservation, **characterized in that** it comprises a vacuum pump (1) according to one or more of the preceding claims.

## Patentansprüche

1. Eine Vakuumpumpe (1), insbesondere für Geräte zur Lebensmittelerhaltung, die einen Pumpenkörper (2) umfasst, weiter Folgendes umfassend: einen Motor (3) mit Permanentmagnet und veränderlicher Rotationsgeschwindigkeit, der ausgebildet ist, um die Pumpe zu steuern, und eine elektronische Leistungs- und Regelungskarte (4), konfiguriert, um den Motor (3) mit Permanentmagnet und veränderlicher Rotationsgeschwindigkeit zu steuern; **dadurch gekennzeichnet, dass** die elektronische Leistungs- und Regelungskarte (4) konfiguriert ist, um die Schwankung der Viskosität des Schmieröls der Pumpe als Funktion der Schwankung des Gegenmoments zu nutzen.

2. Die Pumpe gemäß Anspruch 1, **dadurch gekennzeichnet, dass** die elektronische Leistungs- und Regelungskarte (4) konfiguriert ist, um die Schwankung der Leistung, die von dem Motor (3) mit Permanentmagnet und veränderlicher Rotationsgeschwindigkeit absorbiert wird, als Schwankung des Stroms abzulesen, die durch die Schwankung des Magnetfeldes des Motors mit Permanentmagnet erzeugt wird.

3. Die Pumpe gemäß einem oder mehreren der obigen Ansprüche, **dadurch gekennzeichnet, dass** die elektronische Leistungs- und Regelungskarte (4) konfiguriert ist, um den Drehmomentbedarf des Motors (3) mit Permanentmagnet und veränderlicher Rotationsgeschwindigkeit zu optimieren.

4. Die Pumpe gemäß einem oder mehreren der obigen Ansprüche, **dadurch gekennzeichnet, dass** die elektronische Leistungs- und Regelungskarte (4) konfiguriert ist, um Start-Stopp-Profile mit Hochlauf oder Rücklauf für den Motor (3) mit Permanentmagnet und veränderlicher Rotationsgeschwindigkeit zu bestimmen.

5. Ein Gerät zur Lebensmittelerhaltung, **dadurch gekennzeichnet, dass** es eine Vakuumpumpe (1) gemäß einem oder mehreren der obigen Ansprüche umfasst.

## Revendications

1. Pompe à vide (1), en particulier pour appareils de conservation des aliments, qui comprend un corps de pompe (2), comprenant en outre un moteur à aimant permanent à vitesse de rotation variable (3) qui est adapté pour commander ladite pompe, et une carte électronique d'alimentation et de commande (4) configurée pour commander ledit moteur à aimant permanent à vitesse de rotation variable (3), **caractérisée en ce que** ladite carte électronique d'alimentation et de commande (4) est configurée pour utiliser la variation de la viscosité de l'huile lubrifiante de la pompe en fonction de la variation du couple résistif.

2. La pompe selon la revendication 1, **caractérisée en ce que** ladite carte électronique d'alimentation et de commande (4) est configurée pour lire la variation de la puissance absorbée par ledit moteur à aimant permanent à vitesse de rotation variable (3) en tant que variation du courant généré par la variation du champ magnétique dudit moteur à aimant permanent.

3. La pompe selon une ou plusieurs des revendications précédentes, **caractérisée en ce que** ladite carte électronique d'alimentation et de commande (4) est configurée pour optimiser la demande de couple dudit moteur à aimant permanent à vitesse de rotation variable (3).

4. Pompe selon une ou plusieurs des revendications précédentes, **caractérisée en ce que** ladite carte électronique d'alimentation et de commande (4) est configurée pour définir des profils de démarrage-arrêt avec accélération ou décélération pour ledit moteur à aimant permanent à vitesse de rotation variable (3).

5. Appareil pour la conservation des aliments, **caractérisé en ce qu'**il comprend une pompe à vide (1) selon une ou plusieurs des revendications précédentes.
